(19) Europäisches Patentamt
European Patent Office
Office européen des brevets

(11) Veröffentlichungsnummer : **0 158 888 B1**

(12) # EUROPÄISCHE PATENTSCHRIFT

(45) Veröffentlichungstag der Patentschrift : **24.01.90**

(21) Anmeldenummer : **85103728.3**

(22) Anmeldetag : **28.03.85**

(51) Int. Cl.$^5$ : **C 09 B 35/035**, C 09 B 43/08, C 08 J 3/20, D 06 P 1/18, D 21 H 21/28

(54) **Disazoverbindungen, Verfahren zu ihrer Herstellung und ihre Verwendung.**

(30) Priorität : **05.04.84 DE 3412730**

(43) Veröffentlichungstag der Anmeldung : **23.10.85 Patentblatt 85/43**

(45) Bekanntmachung des Hinweises auf die Patenterteilung : **24.01.90 Patentblatt 90/04**

(84) Benannte Vertragsstaaten : CH DE FR GB IT LI

(56) Entgegenhaltungen :
**CH--A-- 132 803**
**DE--A-- 2 232 524**
**DE--A-- 2 555 515**
**DE--B-- 1 266 422**
**GB--A-- 922 383**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Hunger, Klaus, Dr.**
**Johann-Strauss-Strasse 35**
**D-6233 Kelkheim (Taunus) (DE)**

**EP 0 158 888 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf Disazoverbindungen, insbesonders Disazopigmente und ihre Herstellung. Beispielsweise lassen sich so nicht nur symmetrische, sondern auch unsymmetrische Disazoverbindungen herstellen.

In der DE-OS 2 232 524 (GB-A-1370543) sind Disazopigmente beschrieben mit 1,4-Phenylendiamin als Bisdiazokomponente und Acetessigaryliden und Pyrazolonen als Kupplungskomponenten. Diese Disazopigmente werden hergestellt, indem man ein Mol Diamin mit zwei Mol einer enolisierten oder enolisierbaren Ketomethylenverbindung in einem organischen Lösemittel mit salpetriger Säure oder deren Estern behandelt. Sie sind, auf Grund ihres Herstellungsverfahrens, bei dem beide Aminogruppen diazotiert werden, stets symmetrisch aufgebaut, so daß sich an dem 1,4-Phenylendiaminrest zwei gleiche Reste der Kupplungskomponenten befinden. Nachteilig ist, daß die Verbindung nach dem bekannten Verfahren mit ungenügenden Ausbeuten und zudem in einer Teilchengröße anfallen, die für die Verwendung als Pigment im allgemeinen ungeeignet ist. Die bekannten Disazoverbindungen sind ferner in ihren Eigenschaften, so insbesonders bezüglich der Deckkraft und dem Glanz, aber auch bezüglich der Migrationsechtheit, Lichtechtheit und Thermostabilität ungenügend. Daher können sie z. B. für manche Kunststoffeinfärbungen, insbesonders für Polyvinylchlorid, Polyolefine oder auch für Lacke nur begrenzt eingesetzt werden. Eine Verbesserung der genannten Echtheiten ist immer wieder gefordert worden, um Pigmente auf dieser Basis universell einsetzen zu können.

Gegenstand der Erfindung ist ein Verfahren zur Herstellung von Verbindungen der Formel I

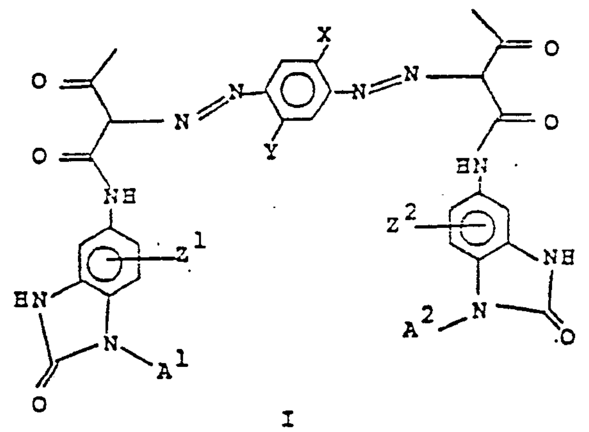

I

(I)

in der X und Y gleich oder verschieden sind und Wasserstoff, Brom oder Chlor, eine Methyl-, Methoxy-, Ethoxy-, Nitro-, Trifluormethyl-, Carbomethoxy- oder Carboethoxygruppe bedeuten, $A^1$ und $A^2$ jeweils Wasserstoff, eine Methyl- oder Ethylgruppe und $Z^1$ und $Z^2$ in 6- oder 7-Stellung des heteroaromatischen Ringsystems jeweils Wasserstoff, Brom oder Chlor, eine Methyl-, Methoxy-, Ethoxy-, Carbomethoxy-, Carboethoxy- oder Nitrogruppe darstellen, das dadurch gekennzeichnet ist, daß man Verbindungen der Formel II

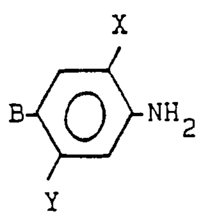

(II)

in der B eine Amino- oder Nitrogruppe ist und X und Y gleich oder verschieden sind und die oben genannten Bedeutungen haben,

a) im Falle, daß B eine Aminogruppe ist, diese 1,4-Diaminobenzole in wäßrigem Medium monodiazotiert und mit einer Verbindung aus der Reihe der 5-Acetoacetylaminobenzimidazole der Formel III

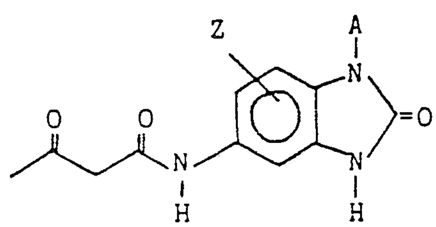

(III)

in der A und Z jeweils die oben für $A^1$ und $A^2$ bzw. $Z^1$ und $Z^2$ angegebene Bedeutung haben, zur Aminoazoverbindung der Formel IV

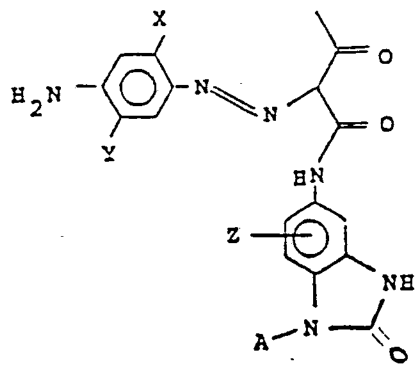

(IV)

kuppelt, oder

b) im Falle, daß B eine Nitrogruppe ist, X und Y die oben angegebenen Bedeutungen haben, jedoch keine Nitrosubstituenten darstellen, dieses 4-Nitroanilin diazotiert und die Diazoniumverbindung auf ein Benzimidazolonderivat der Formel III kuppelt, wobei A und Z die oben genannten Bedeutungen haben, aber keine Nitrosubstituenten darstellen und dann die erhaltene Nitroazoverbindung der Formel V

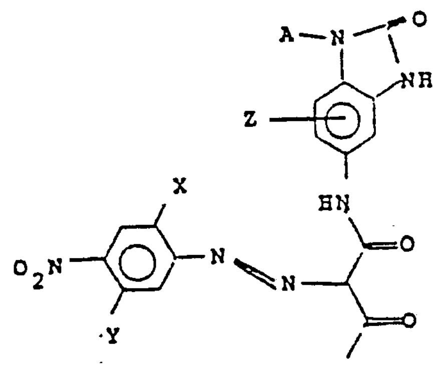

(V)

zur Aminoazoverbindung der Formel IV reduziert und

c) die jeweils erhaltenen Aminoazoverbindungen der Formel IV erneut diazotiert und auf eine gleich oder verschieden substituierte Verbindung der Formel III kuppelt und das erhaltene Reaktionsprodukt in üblicher Weise aufarbeitet und anschließend einer thermischen Nachbehandlung bei 80 bis 200 °C unterzieht.

Da man nach beiden Verfahren zunächst die Aminoazoverbindung erhält, kann man daraus hinsichtlich der Kupplungskomponente gezielt symmetrische und auch unsymmetrische Disazoverbindunger herstellen.

Gegenstand der Erfindung sind auch neue Disazoverbindungen welche eine elektronenmikroskopisch gemessene mittlere Teilchengröße von ≤ 0,25 µm aufweisen und die der Formel I entsprechen, in der X, $A^1$, $A^2$, $Z^1$ und $Z^2$ die bereits genannte Bedeutung haben und Y neben Brom oder Chlor bevorzugt ein Wasserstoffatom, eine Methyl-, Methoxy-, Ethoxy-, Nitro-, Trifluormethyl-, Carbomethoxy- oder Carboethoxygruppe darstellt.

Besonders herausgestellt werden Disazoverbindungen des vorgenannten Typs, die bei ihrer Herstellung in einer Teilchengröße von ≤ 0,25 µm anfallen und welche strukturell so aufgebaut sind, daß in der zugrundeliegenden Formel I X, Y, $A^1$, $A^2$, $Z^1$ und $Z^2$ Wasserstoffatome bedeuten, oder in denen X ein Chloratom, oder in denen X und Y Methylgruppen, oder in denen $A^2$ die Methylgruppe, oder in denen X ein Chloratom sowie $Z^1$ und $Z^2$ in 7-Stellung befindliche Chloratome bzw. in 6-Stellung befindliche Methoxygruppen kennzeichnen, während in diesen speziellen Fällen die restlichen, durch Buchstaben symbolisierten, variabel vorhandenen Substituenten jeweils Wasserstoffatome darstellen.

Das erfindungsgemaße Verfahren zeichnet sich neben der Erzielung sehr guter Ausbeuten vor allem dadurch aus, daß es Disazoverbindungen liefert, die hinsichtlich ihrer Teilchengröße und der Korngrößenverteilung den aus dem Stand der Technik bekannten Verbindungen deutlich überlegen sind. So ergab die Nacharbeitung der Tabellen-Beispiele 19 und 20 der DE-OS 2 232 524 Verbindungen, deren Teilchen im Mittel etwa 780 bis 1 580 mal größer waren als die mittlere Teilchengröße der erfindungsgemäßen Verbindungen, deren elektronenmikroskopisch gemessene maximale Teilchengröße 0,25 µm nicht überschritt.

Die Verbindungen der DE-OS 2 232 524 sind als Pigmente völlig ungeeignet, da eine Verkleinerung

der grobkristallinen Teilchen nach den herkömmlichen Methoden nicht oder nur unter großem Auswand möglich ist.

Die Monodiazotierung von im Kern halogenierten 1,4-Diaminobenzolen ist aus der DE-PS 586 355 bekannt. Bei diesem Verfahren werden die Verbindungen mit der zur Diazotierung einer Aminogruppe nötigen Menge Mineralsäure und salpetriger Säure einseitig diazotiert und die so erhaltenen Diazoverbindungen in fester Form durch Salzzugabe ausgefällt.

Die Monodiazotierung der 1,4-Diaminobenzole der Formel II kann aber auch beispielsweise gemäß DE-OS 2 555 515 erfolgen, indem man das betreffende 1,4-Diaminobenzol in Wasser oder in einem Gemisch aus Wasser und einem mit Wasser mischbaren Lösungsmittel, beispielsweise Methanol, Ethanol, Aceton, Dioxan, Formamid, Dimethylformamid, Dimethylsulfoxid, Tetrahydrofuran, Ethylenglykol, Diethylenglykoldimethylether und/oder N-Methylpyrrolidon, im pH-Bereich von 1 bis 4, vorzugsweise 1,5 bis 3,5 in Gegenwart von Mineralsäuren, beispielsweise von Schwefelsäure oder Phosphorsäure, insbesondere von Halogenwasserstoffsäuren, wie Salzsäure, oder in Gegenwart von niedermolekularen organischen Säuren, beispielsweise Oxalsäure oder Chloressigsäure, insbesondere Essigsäure oder in Gegenwart eines Gemisches einer Mineralsäure mit einer niedermolekularen organischen Säure, beispielsweise einem Gemisch aus Phosphorsäure und Propionsäure, oder Salzsäure und Essigsäure, oder Schwefelsäure und Essigsäure diazotiert.

Die Diazotierung der 4-Nitroaniline der Formel II oder der Aminoazoverbindungen der Formel IV kann beispielsweise mit Alkalinitriten oder niederen Alkylnitriten mit 1 bis 5 C-Atomen in der Alkylgruppe mit ausreichend starken Säuren, insbesondere einer Mineralsäure wie Schwefelsäure oder Salzsäure, aber auch Nitrosylschwefelsäure erfolgen.

Die Temperatur bei der Diazotierung kann in einem weiten Bereich, beispielsweise von — 10° bis + 30 °C, schwanken. Bevorzugt diazotiert man jedoch bei 0° bis + 5 °C.

Auch die Dauer der Diazotierung kann man stark variieren. In der Regel benötigt man 5 bis 120 Minuten.

Bei der Diazotierung und/oder bei der anschließenden Kupplung kann es von Nutzen sein, beispielsweise zur Erzielung einer günstigen Korngrößenverteilung und/oder zur Beeinflussung der Reaktionsgeschwindigkeit, einen Zusatz von oberflächenaktiven Mitteln zu verwenden, z. B. nichtionogene, anionaktive oder kationaktive Dispergiermittel.

Solche oberflächenaktiven Mittel sind z. B. anionaktive Substanzen wie Fettsäuretauride, Fettsäure-N-methyl-tauride, Fettsäureisäthionate, Alkylbenzolsulfonate, Alkylnaphthalinsulfonate, Alkylphenolpolyglykolethersulfate und Fettalkoholpolyglykolethersulfate, Fettsäuren z. B. Palmitin-, Stearin- und Ölsäure, Seifen, z. B. Alkalisalze von Fettsäuren, Naphthensäure und Harzsäuren, z. B. Abietinsäure, alkalilösliche Harze, z. B. kolophoniummodifizierte Maleinatharze, kationaktive Substanzen, wie quartäre Ammoniumsalze, N-Oxide tertiärer Amine bzw. ihrer Salze, Fettamine und ihre oxethylierten Derivate, nichtionogene Substanzen wie Fettalkoholpolyglykolether (ethoxylierte Fettalkohole), Fettsäurepolyglykolester, Alkylphenolpolyglykolether und Dialkylpolyglykolether.

Die oberflächenaktiven Mittel können einzeln oder auch als Gemisch zugesetzt werden. Die Menge kann in weiten Grenzen schwanken, wobei im allgemeinen 0,1 bis 20 Gew.-%, vorzugsweise 2 bis 10 Gew.-%, bezogen auf eine 100 %ige Ausbeute eingesetzt werden.

Bei der Kupplung geht man zweckmäßigerweise so vor, daß man die Kupplungskomponente vorzugsweise in wäßriger Alkalilauge lost, mit Säure wieder ausfällt und schließlich mit der erhaltenen Suspension die Kupplung bei 10 bis 80, vorzugsweise 15 bis 35 °C durchführt.

Die Kupplung kann auch in Gegenwart organischer Lösemittel durchgeführt werden, z. B. Eisessig, niederen Alkanolen, Dioxan, Formamid, Dimethylformamid, Dimethylsulfoxid, Pyridin oder N-Methylpyrrolidon.

Die Reduktion der Nitroazoverbindungen der Formel V, die aufgrund ihrer Substitution stabile Azobrücken besitzen, erfolgt im allgemeinen nach herkömmlichen Methoden z. B. durch Eisen- oder Sulfhydrat-Reduktion oder mit anderen Reduktionsmitteln, aber auch katalytisch mit Wasserstoff. Beispiele für die katalytische Reduktion mit Raney-Nickel von analogen Nitroazoverbindungen, die anstelle der Benzimidazolongruppe eine Phenyl- oder Pyrazolongruppe aufweisen, sind in der DE-B-1266422 beschrieben.

Als Lösemittel, in der die Reduktion erfolgt, sind neben Wasser alle gegen Reduktionen inerte organische Lösemittel, beispielsweise Alkanole, aprotische Lösungsmittel wie Dimethylformamid, Dimethylsulfoxid, N-Methylpyrrolidon, aromatische Kohlenwasserstoffe wie Toluol und die verschiedenen Xylole geeignet.

Nach der katalytisch durchgeführten Reduktion, beispielsweise mit Wasserstoff/Raney-Nickel, wird vom Lösemittel abfiltriert, die Aminoazoverbindung mit wäßriger Salzsäure bei Zimmertemperatur verrührt, bis das metallische Nickel in Nickelchlorid überführt ist und anschließend filtriert, salzfrei und neutralgewaschen und getrocknet. Wenn die Aminoazoverbindung in den Lösemitteln löslich ist, wird der Katalysator nach der Reduktion abfiltriert und die Aminoazoverbindung isoliert.

Zur Erzielung der vollen Farbstärke wird das Reaktionsprodukt nach der zweiten Kupplung einige Zeit erhitzt, beispielsweise auf Rückflußtemperatur oder unter Druck bei Temperaturen über 100 °C, gegebenenfalls in Gegenwart von organischen Lösemitteln, wie niederen Alkanolen, beispielsweise Ethanol oder Isobutanol, halogenierten aromatischen Kohlenwasserstoffen, wie Chlorbenzol oder die

verschiedenen Dichlorbenzole, z. B. o-Dichlorbenzol, ferner Dimethylformamid, N-Methylpyrrolidon, Dimethylsulfoxid oder in Gegenwart von Harzseife.

Besonders reine, gut dispergierbare und farbstarke Pigmente erhält man mit den erfindungsgemäßen Produkten, wenn man nach der Kupplung die feuchten Preßkuchen oder die getrockneten Pulver einer thermischen Nachbehandlung bei 80 bis 200, vorzugsweise 120 bis 160 °C in wäßriger Suspension, gegebenenfalls in oder in Gegenwart von organischen Lösemitteln wie Alkoholen, vor allem niederen Alkanolen mit 1 bis 6 C-Atomen, Pyridin, Eisessig, Dimethylformamid, N-Methylpyrrolidon, Dimethylsulfoxid, halogenierten aromatischen Kohlenwasserstoffen, wie Chlorbenzol oder Dichlorbenzolen, z. B. o-Dichlorbenzol oder Nitrobenzol unterwirft und/oder eine Mahlung der Pigmente unter Zusatz von Mahlhilfsmitteln anschließt.

Die Herstellung der Pigmente kann auch in Gegenwart eines Trägermaterials, beispielsweise von Schwerspat, erfolgen.

Die erfindungsgemäßen Verbindungen sind unlöslich in Wasser und in den üblichen organischen Lösemitteln und eignen sich in fein verteilter Form zur Pigmentierung von hochmolekularem organischen Material, wobei es keine Rolle spielt, ob dieses Material als plastische Massen, Schmelzen oder in Form von Spinnlösungen, Lacken oder Druckfarben vorliegt. Sie können verwendet werden zum Pigmentieren bzw. Färben von Druckfarben, Farblacken und Dispersionsanstrichfarben und anderen Materialien z. B. Papier, Celluloseäthern und -estern, Polyamiden, Polyurethanen, Polyacrylnitrilen, Polyestern, wie Polyglykolterephthalat, Viskose, Acetylcellulose, Nitrocellulose, natürlichen oder synthetischen Harzen z. B. Aminoplasten, insbesondere Harnstoff- und Melamin-Formaldehydharzen, Alkydharzen, Acrylatharzen, Phenolharzen, Polycarbonaten, Polystyrol, Polyvinylchlorid, Polyolefinen wie Polyethylen und Polypropylen sowie Polyacrylsäureester, Kautschuk, Casein, Silikon und Silikonharzen. Sie sind ferner geeignet für den Pigmentdruck auf Substraten, insbesondere Textilfasermaterialien oder anderen flächenförmigen Gebilden, wie beispielsweise Papier.

Die Pigmente sind sehr farbstark, besitzen eine Teilchengröße von ≤ 0,25μm, sind gegenüber dem Einfluß von Chemikalien, vor allem Lösemittel, außerordentlich beständig, weisen einwandfreie Migrationsechtheiten, hohe Thermostabilität und sehr gute Licht- und Wetterechtheiten auf.

In den nachfolgenden Beispielen bedeutet % Gewichtsprozent.

## Beispiele

1a) 10,8 g 1,4-Diaminobenzol wurden in 100 ml Wasser und 40 ml 5n Salzsäure gelost und auf 5 °C abgekühlt. Innerhalb einer Stunde wurden 50,3 ml 2n-Natriumnitritlösung zugetropft. Der pH-Wert stieg dabei von 2 auf 3,5 an. Am Ende der Zugabe wurde ein schwacher Nitritüberschuß festgestellt. Es wurde 30 Minuten nachgekühlt und der Ansatz mit Kohle und Kieselgur geklärt.

24 g 5-Acetoacetylaminobenzimidazolon wurden in einem Gemisch von 18 ml Natronlauge (33 %ig) und 300 ml Wasser gelöst. Durch Zutropfen von 10,5 ml Eisessig in 100 ml Wasser wurde ein pH-Wert von 9 eingestellt, wobei die Kupplungskomponente vollständig ausgefällt wurde. Zu der Ausfällung wurde innerhalb von 30 Minuten die Lösung der Diazokomponente zugetropft, wobei der pH-Wert von 9 durch wechselseitige Zugabe von ca. 200 ml einer 3 %igen Natriumkarbonat-Lösung eingehalten wurde. Nach Beendigung der Kupplung wurde mit verdünnter Salzsäure (2 %ig) auf pH 7 gestellt und 30 Minuten bei 95 °C erhitzt. Der orangefarbene Niederschlag wurde abfiltriert, salzfrei gewaschen und getrocknet, wobei 30,3 g = (86,1 % d. Th.) eines organgefarbenen Pulvers der Formel

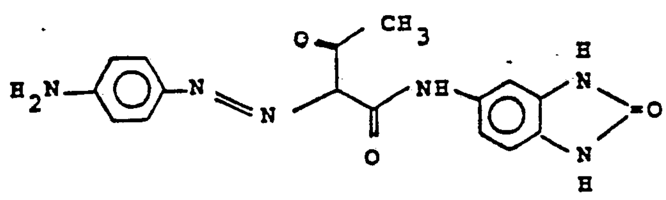

mit Schmelzpunkt 288 °C erhalten wurden.

1b) 17,6 g der 4-Aminophenylazoverbindung des Beispiels la wurden in 100 ml Eisessig und 20 ml Salzsäure (31 %ig) eine Stunde lang verrührt. Bei 10 °C wurden 10 ml einer 5n-Natriumnitritlösung zugetropft und eine Stunde bei geringem Nitritüberschuß nachgerührt, mit 500 ml Eiswasser versetzt, wobei die Diazoniumsalzlösung in Lösung ging. Der Nitritüberschuß wurde mit etwas Amidosulfonsäure zerstört.

12 g 5-Acetoacetylaminobenzimidazolon wurden in einem Gemisch aus 200 ml Wasser und 10 ml Natronlauge (33 %ig) gelöst. Diese Lösung wurde auf eine Vorlage von 200 ml Eiswasser und 6 ml Eisessig gegeben, wobei die Kupplungskomponente wieder ausfiel. Anschließend wurde der Ansatz mit 50 ml 4n-Natriumacetatlösung auf einen pH-Wert von 5 gestellt.

Die erhaltene Diazoniumsalzlösung wurde nun innerhalb einer Stunde in die Fällung der Kupplungskomponente eingetropft und nach Gesamtzugabe noch zwei Stunden bei Raumtemperatur und eine Stunde bei 90° nachgerührt. Das zunächst rotbraune Pigment wurde hierbei orangefarben. Anschließend

wurde abgesauft, salzfrei gewaschen und getrocknet. Ausbeute 26,5 g (88,9 % d. Th.) Farbton 5 (C.I. Hue Indication Chart). Das Rohpigment wurde in 350 ml Dimethylsulfoxid 3 Stunden bei 180 °C behandelt, abgesaugt, mit Methanol gewaschen und getrocknet. Das erhaltene sehr farbstarke Pigment der Formel I, in der X, Y, $A^1$, $A^2$, $Z^1$ und $Z^2$ Wasserstoffatome sind, kann zu äußerst migrationsechten Druckfarben, Lacken und Kunststoffen in orangen Farbtönen verarbeitet werden.

2a) Die nach Beispiel 1a) hergestellt 4-Aminophenylazoverbindung wurde auch auf folgendem Weg synthetisiert : 50 g der durch Kupplung von diazotiertem 4-Nitroanilin auf 5-Acetoacetylaminobenzimdazolon erhaltene 4-Nitro-phenylazoverbindung wurden in 500 ml N-Methylpyrrolidon mit 3 g Raney-Nickel bei 80 °C und 50 bar Wasserstoffdruck hydriert. Die orangefarbene Suspension wurde dann mit N-Methylpyrrolidon auf 3 l verdünnt, bei 100 °C gelöst und vom Nickelkatalysator abfiltriert. Dann wurde die Lösung bei vermindertem Druck bei 80 bis 100 °C auf ca. 1 l Volumen eingeengt, das orangefarbene Produkt abgesaugt, mit Ethanol gewaschen und getrocknet. Ausbeute 43,7 g, Fp. 288° (94,9 % d. Th.).

Anstelle N-Methylpyrrolidon können auch andere Lösemittel, z. B. Dimethylformamid verwendet werden. Nach der Hydrierung kann man auch die Aminoazoverbindung abfiltrieren, mit Wasser und Salzsäure verrühren bis der Nickelkatalysator zerstört ist und anschließend filtrieren und nickelfrei waschen.

2) Die erhaltene 4-Aminophenylazoverbindung wurde gemäß Beispiel 1b) diazotiert und erneut auf 5-Acetoacetylaminobenzimidazolon gekuppelt, wobei man das Disazopigment gemäß Beispiel 1b) erhielt.

Weitere Disazoverbindungen, die sich nach den erfindungsgemäßen Verfahren herstellen lassen, sind als Beispiele in der folgenden Tabelle genannt :
(Bezeichnungen gemäß Formel I) :

| Bsp. | X | Y | $A^1$ | $Z^1$ | $A^2$ | $Z^2$ | Farbton | C.I. |
|---|---|---|---|---|---|---|---|---|
| 3 | H | H | H | H | $CH_3$ | H | gelbstichig orange | 4 |
| 4 | H | $CH_3$ | H | H | H | H | orange | 5 |
| 5 | H | Cl | H | H | H | H | orange | 5 |
| 6 | H | $OCH_3$ | H | H | H | H | rotstichig orange | 6 |
| 7 | $CH_3$ | $CH_3$ | H | H | H | H | rotstichig orange | 6 |
| 8 | Cl | Cl | H | H | $CH_3$ | H | gelbstichig orange | 4 |
| 9 | H | $COOCH_3$ | H | H | H | H | orange | 5 |
| 10 | H | $CF_3$ | H | H | H | H | rotstichig orange | 3 |
| 11 | H | H | H | Cl | H | Cl | gelbstichig orange | 4 |
| 12 | $OCH_3$ | $OCH_3$ | H | H | H | H | violett | 12 |
| 13 | H | Cl | H | 6-Cl | H | 6-Cl | rotstichig orange | 6 |
| 14 | H | Cl | $CH_3$ | H | $CH_3$ | H | rotstichig orange | 6 |
| 15 | H | Cl | H | 7-Cl | H | 7-Cl | rotstichig orange | 6 |
| 16 | H | Cl | H | 6-$OCH_3$ | H | 6-$OCH_3$ | orange | 5 |
| 17 | H | Cl | H | 7-$CH_3$ | H | 7-$CH_3$ | orange | 5 |
| 18 | H | Cl | H | 6-$CH_3$ | H | 6-$CH_3$ | rotstichig orange | 6 |
| 19 | H | $NO_2$ | H | H | H | H | rotstichig orange | 6 |
| 20 | H | Cl | H | 6-$COOCH_3$ | H | 6-$COOCH_3$ | gelbstichig orange | 4 |
| 21 | Cl | Cl | H | H | H | H | gelbstichig orange | 4 |
| 22 | Cl | Cl | $CH_3$ | H | $CH_3$ | H | gelbstichig orange | 4 |

C.I. = Farbton gemäß « C.I. Hue Indication Chart ».

## Patentansprüche

1. Verfahren zur Herstellung von Disazoverbindungen der Formel I

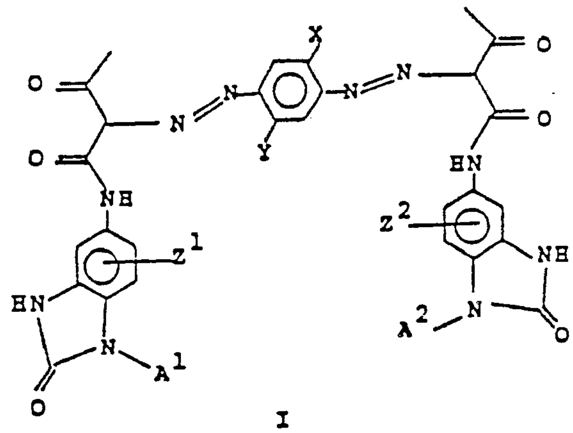 (I)

I

in der X und Y gleich oder verschieden sind und Wasserstoff, Brom oder Chlor, eine Methyl-, Methoxy-, Ethoxy-, Nitro-, Trifluormethyl-, Carbomethoxy- oder Carboethoxygruppe bedeuten, $A^1$ und $A^2$ jeweils Wasserstoff, eine Methyl- oder Ethylgruppe und $Z^1$ und $Z^2$ in 6- oder 7-Stellung des heteroaromatischen Ringsystems jeweils Wasserstoff, Brom oder Chlor, eine Methyl-, Methoxy-, Ethoxy-, Carbomethoxy-, Carboethoxy- oder Nitrogruppe darstellen, das dadurch gekennzeichnet ist, daß man Verbindungen der Formel II

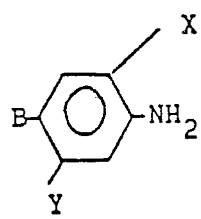 (II)

in der B eine Amino- oder Nitrogruppe ist und X und Y gleich oder verschieden sind und die oben genannten Bedeutungen haben,

a) im Falle, daß B eine Aminogruppe ist, diese 1,4-Diaminobenzole in wäßrigem Medium monodiazotiert und mit einer Verbindung aus der Reihe der 5-Acetoacetylaminobenzimidazole der Formel III

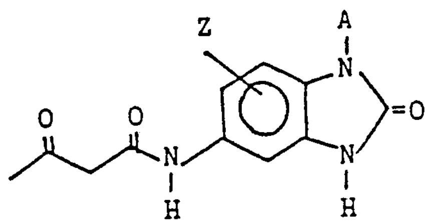 (III)

in der A und Z jeweils die oben für $A^1$ und $A^2$ bzw. $Z^1$ und $Z^2$ angegebene Bedeutung haben, zur Aminoazoverbindung der Formel IV

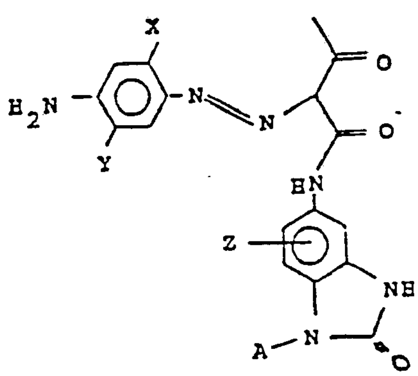 (IV)

kuppelt, oder

b) im Falle, daß B eine Nitrogruppe ist, X und Y die oben angegebenen Bedeutungen haben, jedoch keine Nitrosubstituenten darstellen, dieses 4-Nitroanilin diazotiert und die Diazoniumverbindung auf ein Benzimidazolonderivat der Formel III kuppelt, wobei A und Z die oben genannten Bedeutungen haben, aber keine Nitrosubstituenten darstellen, und dann die erhaltene Nitroazoverbindung der Formel V

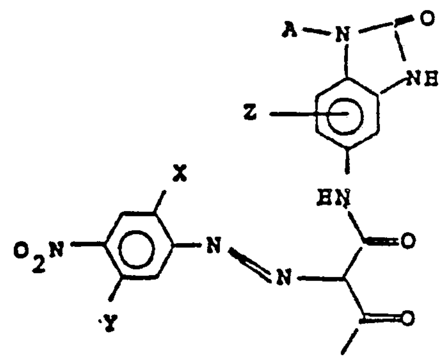

(V)

zur Aminoazoverbindung der Formel IV reduziert und c) die jeweils erhaltenen Aminoazoverbindungen der Formel IV erneut diazotiert und auf eine gleich oder verschieden substituierte Verbindung der Formel III kuppelt und das erhaltene Reaktionsprodukt in üblicher Weise aufarbeitet und anschließend einer thermischen Nachbehandlung bei 80 bis 200 °C unterzieht.

2. Verfahren nach Anspruch 1, dadurch gekennzeichnet, daß die Kupplung jeweils in Gegenwart von kationaktiven oder nichtionogenen Dispergiermitteln in Mengen von 0,1 bis 20, vorzugsweise 2 bis 10 Gew.-%, bezogen auf eine 100 %ige Ausbeute vorgenommen wird.

3. Verfahren nach Anspruch 1 oder 2, dadurch gekennzeichnet, daß die Reduktion der Nitroazoverbindung der Formel V durch Eisen- oder Sulfhydrat-Reduktion oder katalytisch mit Wasserstoff erfolgt.

4. Verfahren nach einem oder mehreren der Ansprüche 1 bis 3, dadurch gekennzeichnet, daß die thermische Nachbehandlung in organischen Lösemitteln oder wäßrigen Mischungen davon vorgenommen wird.

5. Verfahren nach einem oder mehreren der Ansprüche 1 bis 4, dadurch gekennzeichnet, daß die Nachbehandlung bei 120 bis 160 °C vorgenommen wird.

6. Disazoverbindung der im Anspruch 1 definierten Formel I, gekennzeichnet durch eine elektronenmikroskopisch gemessene mittlere Teilchengröße von $\leq 0,25$ µm.

7. Disazoverbindung nach Anspruch 6, dadurch gekennzeichnet, daß Y Wasserstoff, Methyl, Methoxy, Ethoxy, Nitro, Trifluormethyl, Carbomethoxy oder Carboethoxy darstellt.

8. Disazoverbindung nach Anspruch 6, dadurch gekennzeichnet, daß X, Y, $A^1$, $A^2$, $Z^1$ und $Z^2$ jeweils ein Wasserstoffatom bedeuten.

9. Disazoverbindung nach Anspruch 6, dadurch gekennzeichnet, daß Y, $A^1$, $A^2$, $Z^1$ und $Z^2$ jeweils ein Wasserstoffatom und X ein Chloratom bedeuten.

10. Disazoverbindung nach Anspruch 6, dadurch gekennzeichnet, daß X und Y je eine Methylgruppe und $A^1$, $A^2$, $Z^1$ und $Z^2$ je ein Wasserstoffatom bedeuten.

11. Disazoverbindung nach Anspruch 6, dadurch gekennzeichnet, daß $A^2$ eine Methylgruppe und X, Y, $A^1$, $Z^1$ und $Z^2$ je ein Wasserstoffatom bedeuten.

12. Disazoverbindung nach Anspruch 6, dadurch gekennzeichnet, daß X ein Chloratom, $Z^1$ und $Z_2$ je ein Chloratom in 7-Stellung und Y, $A^1$ und $A^2$ je ein Wasserstoffatom bedeuten.

13. Disazoverbindung nach Anspruch 6, dadurch gekennzeichnet, daß X ein Chloratom und Y, $A^1$ und $A^2$ je ein Wasserstoffatom sowie $Z^1$ und $Z^2$ je 6-Methoxy bedeuten.

14. Disazopigment, hergestellt nach dem Verfahren gemäß einem oder mehreren der Ansprüche 1 bis 5.

15. Verwendung der in einem oder mehreren der Ansprüche 6 bis 13 definierten Disazoverbindungen als Pigmente.

16. Verwendung nach Anspruch 15 zum Pigmentieren von Druckfarben, Farblacken, Dispersionsanstrichfarben, Kunststoffen, wie Polyvinylchlorid und Polyolefinen, Kautschuk, natürlichen und synthetischen Harzen, Spinnmassen und im Pigmentdruck auf Substraten, wie Textilfasermaterialien und anderen flächenförmigen Gebilden, wie papier.

## Claims

1. A process for preparing disazo compounds of the formula I

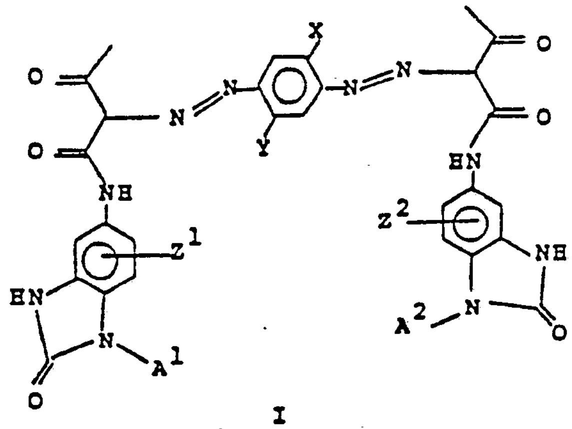

I (I)

in which X and Y are identical or different and denote hydrogen, bromine or chlorine or a methyl, methoxy, ethoxy, nitro, trifluoromethyl, carbomethoxy or carboethoxy group, $A^1$ and $A_2$ each represent hydrogen or a methyl or ethyl group, and Z1 and Z2 in the 6- or 7-position of the heteroaromatic ring system each represent hydrogen, bromine or chlorine, or a methyl, methoxy, ethoxy, carbomethoxy, carboethoxy or nitro group, which comprises taking compounds of the formula II

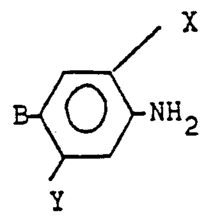

(II)

in which B is an amino or nitro group and X and Y are identical or different and as defined above, and

a) in the case where B is an amino group, monodiazotizing these 1,4-diaminobenzenes in an aqueous medium and coupling the diazonium salt with a 5-acetoacetylaminobenzimidazole compound of the formula III

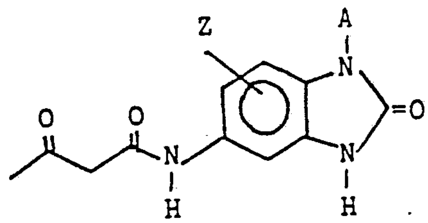

(III)

in which A and Z each have the meaning indicated above for respectively $A^1$ and $A^2$ or $Z^1$ and $Z^2$, to give the aminoazo compound of the formula IV

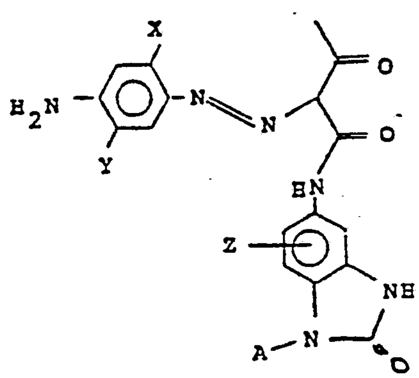

(IV)

or

b) in the case where B is a nitro group and X and Y are as defined above but do not represent nitro

substituents, diazotizing this 4-nitroaniline and coupling the diazonium compound onto a benzimidazolone derivative of the formula III where A and Z are as defined above but do not represent nitro substituents, and then reducing the resulting nitroazo compound of the formula V

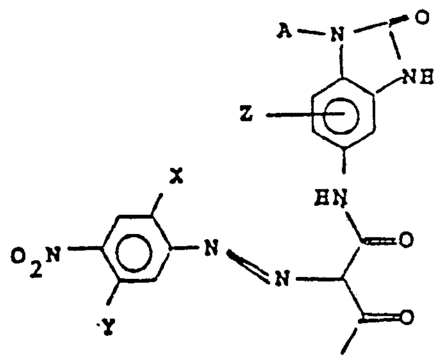

(V)

to the aminoazo compound of the formula IV and

c) diazotizing the respectively resulting aminoazo compounds of the formula IV once more and coupling the diazonium compound onto an identically or differently substituted compound of the formula III and working up the resulting reaction product in a conventional manner and then subjecting it to a thermal aftertreatment at 80 to 200 °C.

2. The process as claimed in claim 1 wherein the coupling is in each case carried out in the presence of cationic or nonionic dispersants in amounts of 0.1 to 20, preferably 2 to 10, % by weight, based on a 100 % yield.

3. The process as claimed in claim 1 or 2 wherein the reduction of the nitroazo compound of the formula V is effected with iron or hydrosulfide or catalytically with hydrogen.

4. The process as claimed in one or more of claims 1 to 3 wherein the thermal aftertreatment is carried out in organic solvents or aqueous mixtures thereof.

5. The process as claimed in one or more of claims 1 to 4 wherein the aftertreatment is carried out at 120 to 160 °C.

6. A disazo compound of the formula I as defined in claim 1, which has an average particle size, as measured by electron microscopy, of $\leqslant 0.25$ µm.

7. A disazo compound as claimed in claim 6, in which Y represents hydrogen, methyl, methoxy, ethoxy, nitro, trifluoromethyl, carbomethoxy, or carboethoxy.

8. A disazo compound as claimed in claim 6, in which X, Y, $A^1$, $A^2$, $Z^1$ and $Z^2$ each denote a hydrogen atom.

9. A disazo compound as claimed in claim 6, in which Y, $A^1$, $A^2$, $Z^1$ and $Z^2$ each denote a hydrogen atom and X denotes a chlorine atom.

10. A disazo compound as claimed in claim 6, in which X and Y each denote a methyl group and $A^1$, $A^2$, $Z^1$ and $Z^2$ each denote a hydrogen atom.

11. A disazo compound as claimed in claim 6, in which $A^2$ denotes a methyl group and X, Y, $A^1$, $Z^1$ and $Z^2$ each denote a hydrogen atom.

12. A disazo compound as claimed in claim 6, in which X denotes a chlorine atom, $Z^1$ and $Z^2$ each denote a chlorine atom in the 7-position and Y, $A^1$ and $A^2$ each denote a hydrogen atom.

13. A disazo compound as claimed in claim 6, in which X denotes a chlorine atom and Y, $A^1$ and $A^2$ each denote a hydrogen atom and $Z^1$ and $Z^2$ each denote a methoxy group in the 6-position.

14. A disazo pigment prepared by the process as claimed in one or more of claims 1 to 5.

15. Use of a disazo compound as defined in one or more of claims 6 to 13, as a pigment.

16. Use as claimed in claim 15, for pigmenting printing inks, lakes, emulsion paints, plastics, such as polyvinyl chloride and polyolefins, rubber, natural and synthetic resins, or spinning compositions and pigment printing on substrates such as textile fiber materials and other sheetlike structures, such as paper.

## Revendications

1. Procédé de préparation de composés disazoïques de formule I ci-dessous

(Voir formule I page 11)

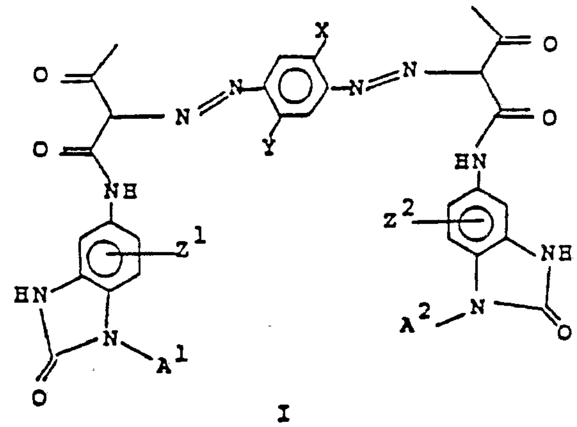

(I)

I

(dans laquelle X et Y, qui peuvent être identiques ou différents l'un de l'autre, sont l'hydrogène, le brome ou le chlore ou un groupe méthyle, méthoxy, éthoxy, nitro, trifluorométhyle, méthoxycarbonyle ou éthoxycarbonyle, $A^1$ et $A^2$ sont chacun l'hydrogène ou le groupe méthyle ou éthyle et $Z^1$ et $Z^2$, qui occupent la position 6 ou 7 du cycle hétéroaromatique, sont chacun l'hydrogène, le brome ou le chlore ou un groupe méthyle, méthoxy, éthoxy, méthoxycarbonyle, éthoxycarbonyle ou nitro), procédé caractérisé en ce que l'on part de composés de formule II

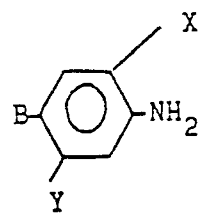

(II)

B désignant un groupe amino ou nitro et X et Y, identiques ou différents, ayant les significations ci-dessus, et

a) si B est un groupe amino, on monodiazote ce 1,4-diaminobenzène en milieu aqueux puis on copule avec un composé de la série des 5-acétoacétylamino-benzimidazoles de formule III

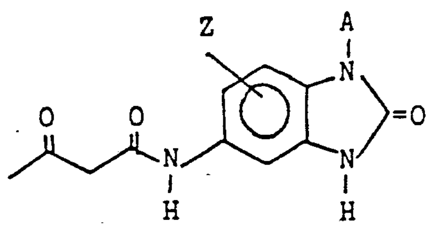

(III)

A et Z ayant les significations données respectivement pour $A^1$ et $A^2$ et pour $Z^1$ et $Z^2$, ce qui forme le composé aminoazoïque de formule IV

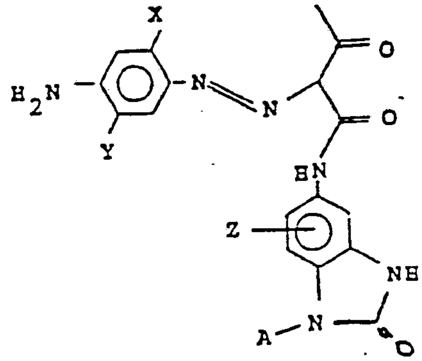

(IV)

ou bien,

b) si B est un groupe nitro, X et Y ayant les significations précédemment données mais à l'exception du groupe nitro, on diazote cette 4-nitroaniline puis on copule le composé de diazonium avec une benzimidazolone de formule III ci-dessus, A et Z ayant les significations indiquées mais en excluant le groupe nitro, et on réduit ensuite en composé aminozoïque de formule IV le composé nitroazoïque ainsi obtenu, de formule V

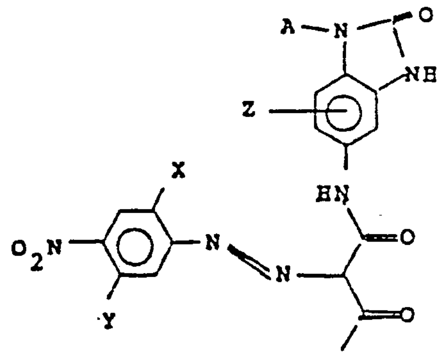

(V)

puis

c) dans les deux cas on diazote à nouveau le composé aminoazoïque de formule IV obtenu, on copule avec un composé de formule III identique ou différent puis on traite le produit de réaction de la manière courante et on le soumet finalement à un traitement complémentaire à la chaleur à une température comprise entre 80 et 200 °C.

2. Procédé selon la revendication 1, caractérisé en ce que la copulation est effectuée en présence d'agents dispersants cationiques ou non ionogènes dans des proportions de 0,1 à 20 % en poids, de préférence de 2 à 10 %, rapportées à un rendement de 100 %.

3. Procédé selon la revendication 1 ou 2, caractérisé en ce que l'on effectue la réduction du composé nitroazoïque de formule V avec du fer ou un sulfhydrate ou par voie catalytique avec de l'hydrogène.

4. Procédé selon une ou plusieurs des revendications 1 à 3, caractérisé en ce que l'on effectue le traitement complémentaire à la chaleur dans des solvants organiques ou dans des mélanges de ces solvants et d'eau.

5. Procédé selon une ou plusieurs des revendications 1 à 4, caractérisé en ce que l'on effectue le traitement complémentaire entre 120 et 160 °C.

6. Composé disazoïque de formule I définie à la revendication 1, caractérisé par une dimension moyenne de ses particules, mesurée au microscope électronique, $\leq$ 0,25 μm.

7. Composé disazoïque selon la revendication 6, caractérisé en ce que Y est un atome d'hydrogène ou un groupe méthyle, méthoxy, éthoxy, nitro, trifluorométhyle, méthoxycarbonyle ou éthoxycarbonyle.

8. Composé disazoïque selon la revendication 6, caractérisé en ce que X, Y, $A^1$, $A^2$, $Z^1$ et $Z^2$ sont des atomes d'hydrogène.

9. Composé disazoïque selon la revendication 6, caractérisé en ce que Y, $A^1$, $A^2$, $Z^1$ et $Z^2$ sont des atomes d'hydrogène et X est un atome de chlore.

10. Composé disazoïque selon la revendication 6, caractérisé en ce que X et Y sont chacun le groupe méthyle et $A^1$, $A^2$, $Z^1$ et $Z^2$ sont des atomes d'hydrogène.

11. Composé disazoïque selon la revendication 6, caractérisé en ce que $A^2$ est le groupe méthyle et X, Y, $A^1$, $Z^1$ et $Z^2$ sont des atomes d'hydrogène.

12. Composé disazoïque selon la revendication 6, caractérisé en ce que X est un atome de chlore, $Z^1$ et $Z^2$ sont des atomes de chlore aux positions 7 et Y, $A^1$ et $A^2$ sont des atomes d'hydrogène.

13. Composé disazoïque selon la revendication 6, caractérisé en ce que X est un atome de chlore, Y, $A^1$ et $A^2$ sont des atomes d'hydrogène et $Z^1$ et $Z^2$ sont chacun le groupe méthoxy à la position 6.

14. Pigment disazoïque qui a été préparé par le procédé suivant une ou plusieurs des revendications 1 à 5.

15. L'emploi comme pigments des composés disazoïques définis à une ou plusieurs des revendications 6 à 13.

16. Emploi selon la revendication 15 pour pigmenter des couleurs d'impression, vernis de coloration, peintures ou produits de revêtement en dispersions, matières plastiques telles que polychlorure de vinyle et polyoléfines, caoutchoucs, résines naturelles ou synthétiques et produits à filer, et dans l'impression pigmentaire sur substrats tels que matières fibreuses textiles et autres articles planiformes comme le papier.